# EUROPEAN PATENT SPECIFICATION

(11) **EP 3 701 798 B1**
(45) Date of publication and mention of the grant of the patent: **20.04.2022**
(21) Application number: 20159904.0
(22) Date of filing: 27.02.2020
(51) Int. Cl.: A22C 29/00, A22C 29/02, A01K 61/59, B65B 13/02

(54) **CRUSTACEAN PINCER RESTRAINT**
KRUSTENTIERZANGENRÜCKHALTEMITTEL
RETENUE DE PINCE DE CRUSTACÉS

(30) Priority: 27.02.2019 GB 201902654
(43) Date of publication of application: 02.09.2020
(73) Proprietor: Maclennan, Gordon, Isle of Lewis, Western Isles HS1 2SD (GB)
(72) Inventor: Maclennan, Gordon, Isle of Lewis, Western Isles HS1 2SD (GB)
(74) Representative: Cameron Intellectual Property Ltd

(56) References cited:
- CN-A- 108 077 391
- JP-A- H1 132 621
- JP-A- 2006 101 863
- US-A- 2 009 546
- US-A- 2 108 327
- US-A- 2 136 484

## Description

The present invention relates to a crustacean pincer restraint, particularly, but not exclusively, for restraining the pincers of crabs without causing bodily harm or suffering and such that the crabs are unable to effectively use their pincers.

Once caught, edible crustaceans, such as crabs, are stored communally prior to transport to live markets. It is common practise to disable pincers to prevent crabs from damaging one another when a number of crabs are stored in close proximity with one another. Disabling crab claws by nicking or cutting of tendons can result in excess bleeding, bacterial growth and mortality. There is a need for a higher welfare storage and transportation solution for edible crustaceans.

Prior art crustacean pincer restraints are described in patent documents US 2,108,327A, US 2,136,484A, US 2,009,546A and JP2006101863 A.

According to a first aspect of the present invention there is provided a crustacean pincer restraint as defined in independent claim 1.

Thus, the crustacean pincer restraint of the present invention effectively locates and anchors against the pincers of a crustacean to restrain the pincers and prevent their use, without harming or damaging the crustacean.

Optionally, the tang is adapted to locate the separator on a portion of the lower pincer. Alternatively, the tang is adapted to locate the separator on a portion of the upper pincer. Optionally, the separator comprises a substantially planar portion. The separator may comprise a substantially planar arrow-shaped portion. Optionally, a rim or lip is provided along at least part of a perimeter of the substantially planar portion. The rim or lip is advantageous since it may substantially restrict lateral movement and slippage of a pincer off the separator.

Optionally, the separator comprises an anchor retaining portion. The anchor retaining portion may include indents for receiving the anchor.

Optionally, the anchor retaining portion is configured such that the anchor is retainable in a plurality of positions/locations. Optionally, the anchor retaining portion is configured to retain the anchor in a plurality of positions/locations such that different sized crustacean pincers can be restrained.

Optionally, the separator is generally elongate, and, optionally, the separator defines a longitudinal axis and a transverse axis. Optionally, the arrow-shaped portion defines a longitudinal axis and a transverse axis.

Optionally, the indents comprise at least two indents which are spaced-apart along a longitudinal axis of the separator/arrow-shaped portion. Optionally, the indents comprise at least two indents which are spaced-apart along a longitudinal axis of the separator/arrow-shaped portion such that the anchor is retainable in a plurality of positions/locations. Optionally, the indents comprise at least two indents which are spaced-apart along a longitudinal axis of the separator/arrow-shaped portion so that the anchor retaining portion is configured to retain the anchor in a plurality of positions/locations such that different sized crustacean pincers can be restrained.

Optionally, the indents comprise at least one pair of idents which are spaced-apart along a transverse axis of the separator/arrow-shaped portion. Optionally, each pair of idents comprise a first ident on a first edge of the separator/arrow-shaped portion and a second ident on a second edge of the separator/arrow-shaped portion, the second edge being opposite to the first edge. Optionally, the first edge and the second edge each extend along the longitudinal axis of the separator/arrow-shaped portion. Optionally, the at least one pair of idents comprises two, three or four pairs of indents, where the pairs of idents are spaced-apart along a longitudinal axis of the separator/arrow-shaped portion (in the manner described in the above paragraph).

Optionally, the separator comprises anchor retaining means. The anchor retaining means may comprise barbs and/or winglets to substantially retain the anchor in the anchor retaining portion in use.

Thus, the separator is shaped such that the anchor is able to securely anchor the separator to the pincers in use. The anchor retaining means may further prevent slippage or dislodgement of the restraint in use.

Optionally, the dimensions of the separator and the tang are selected according to the application. The dimensions of the separator and tang may be selected for use with crustaceans of different size and gender. Thus, separators and/or tangs having a greater dimension maybe selected for larger edible crabs such as male crabs and separators and/or tangs having a smaller dimension may be suitable for use with female edible crabs. This is advantageous since the pincer restraint is versatile and adaptable for use with crustaceans of different sizes.

Optionally, the tang is shaped to hook over a lower pincer of a crustacean. Optionally, the tang comprises a projection extending from the separator. The tang may comprise a projection extending substantially perpendicular from the planar portion of the separator. The tang may be connected to the separator by a curved join. The thickness of the material in the region of the curved join may be less than around 0.8mm. Optionally, the tang comprises a locator profile for assisting with location and retention of the tang on the lower pincer in use. The locator profile may comprise an inward facing ridge.

Optionally, the separator comprises at least one outwardly extending retaining projection. The at least one retaining projection may be shaped to fit within a profile of the inner surface of the pincers in use. The at least one retaining projection may extend substantially perpendicular to the planar portion of the separator.

Optionally, there are at least three points of contact between the separator and the inner surface of the pincers in use. Optionally, the separator comprises two retaining projections extending outwardly on opposing sides of the separator. Thus, the retaining projections may extend outwardly from an upper and a lower face of the separator. Optionally, the retaining projections are located in a staggered configuration, such that the tang and the retaining projections extend outwardly from the separator along different parallel planes.

Raised profiles and projections on the separator and tang are advantageous since they increase the number of points of contact between the restraint and the inner surface of the pincers to restrict separation and maintain the restraint in the correct position in use.

Optionally, the separator is made from plastic. Optionally, the separator is moulded from plastic. Optionally, the separator is a one-piece entity. The separator and the tang may be an integral component. Optionally, edges of the separator and tang are smooth and/or rounded. Smooth rounded edges are advantageous since they restrict the likelihood of damage to live crustaceans during storage and transport.

Optionally, the separator may further comprise grips. The grips may assist handling of the separator and facilitate use thereof. The grips may comprise a plurality of small ridges and/or triangular projections.

Optionally, the anchor comprises a retaining member configured to surround the pincers and anchor the separator in position in use. Optionally, the anchor comprises a resilient retaining member. The resilient retaining member may be stretchable to locate over the pincers, and resilient such that the retaining member returns to the original size following stretching. The retaining member may be locatable within the indents of the separator to anchor the separator in position. The retaining member may comprise a band. The retaining member may comprise a rubber band. The retaining member may comprise a rubber ring.

Optionally, the crustacean pincer restraint may further comprise an applicator for locating the anchor in position relative to the separator in use. The applicator may be configured to stretch the anchor such that it is locatable over pincers in use. The applicator may comprise two separable jaws and an anchor retaining portion. The anchor may be locatable over the anchor retaining portion of the applicator.

According to a second aspect of the present invention there is provided a method for restraining a crustacean pincer as defined in independent claim 14.

Any aspect, embodiment or feature described herein may be used in conjunction with either or both of the first and second aspects of the invention where appropriate. Further features and advantages of the first and second aspects of the present invention will become apparent from the claims and the following description.

Embodiments of the present invention will now be described by way of example only, with reference to the following diagrams, in which:-
Fig. 1 is a perspective view of an underside of a separator and tang of a crustacean pincer restraint according to a first embodiment of the invention;
Fig. 2 is a perspective view of a topside of the separator of Fig. 1;
Fig. 3 is a plan view of a separator of a crustacean pincer restraint according to a second embodiment of the invention;
Fig. 4 is a cross-section of the separator of Fig. 3;
Fig. 5 is a cross-section of the separator of Fig. 3 being fitted to open crustacean pincers;
Fig. 6 is a cross-section of the separator of Fig. 3 between closed crustacean pincers;
Fig. 7 is a perspective consecutive sequence of an applicator and an anchor used in conjunction with the separator of Fig. 3; and
Fig. 8 is a sectional view of the pincer restraint in position over the pincers of a crab.

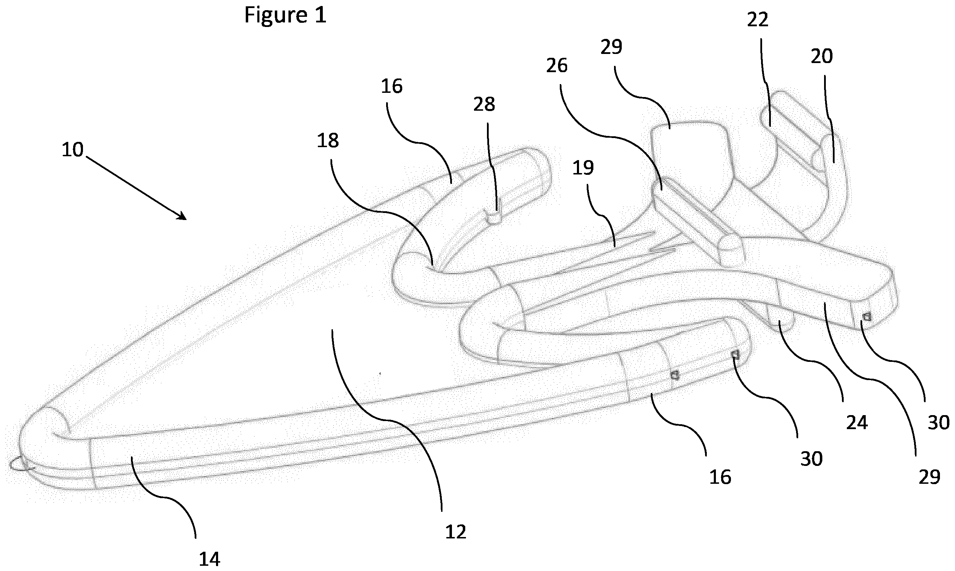

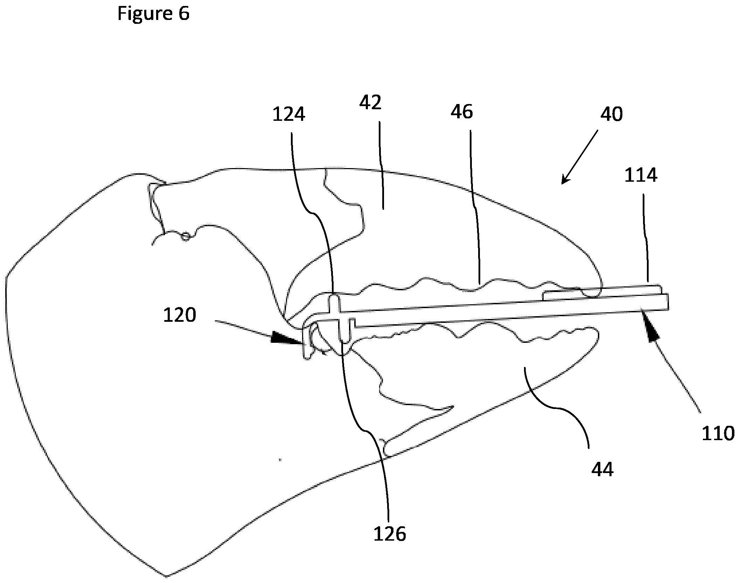

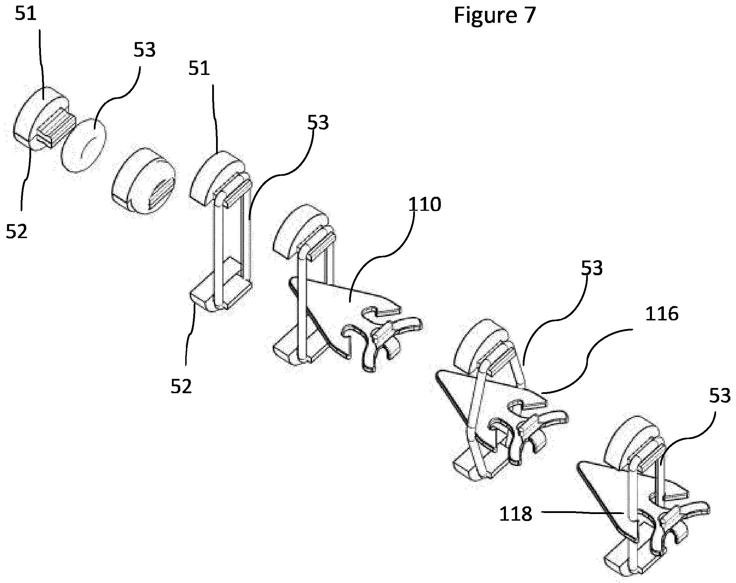

A crustacean pincer restraint of the invention comprises a separator 10, 110 (Figures 1-6) and an anchor 53 (Figure 7).

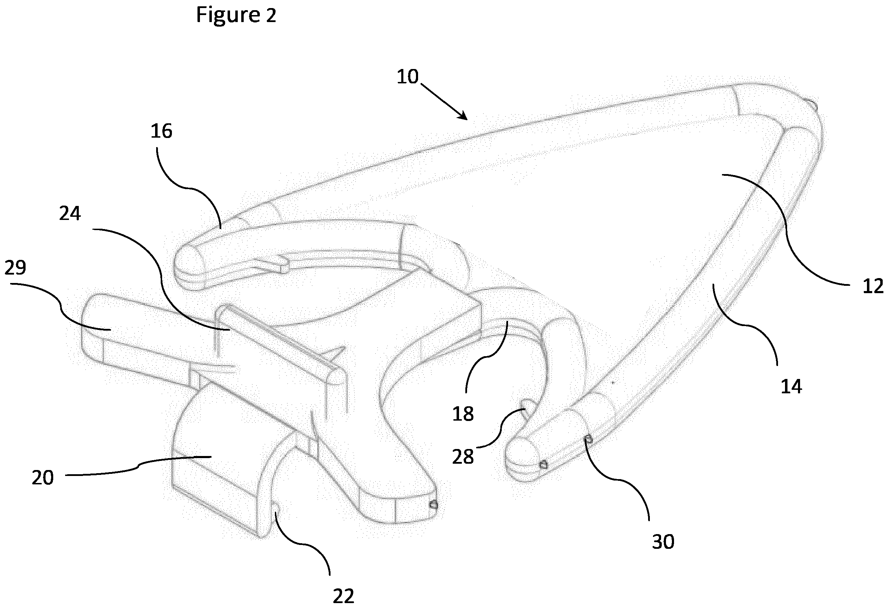

A first embodiment of a separator shown generally at 10 is described with reference to Figures 1 and 2. Figure 1 shows the underside of the separator 10, while Figure 2 shows the opposing side or topside of the separator 10 in use. The separator 10 is suitable for use with common female edible crabs.

The separator 10 is a moulded integral plastic component and comprises a substantially planar arrow-shaped portion 12 bordered by a retaining lip or rim 14. Two symmetrical wings 16 oppose the arrow head to create indents 18 that are shaped to receive the anchor 53 in use. Retaining barbs 28 are located on the inner edge of wings 16 to retain the anchor 53 in use. The arrow-shaped portion 12 leads to a shaft 19 located between the wings 16. The shaft 19 opens into two further symmetrical winglets 29 that are also shaped to retain the anchor 53 in use.

A tang 20 is located at an end of the separator 10 adjacent the winglets 29. The tang 20 extends substantially perpendicular to the plane of the arrow shaped portion 12 via a rounded joining portion having a thickness of typically less than 0.8mm. According to the present embodiment, the dimensions of the joining portion are selected to enable insertion of the separator 10 between the pincers of a female edible crab. The tang has an inwardly facing ridge 22 to aid retention of the separator 10 in use.

Two further raised profiles 24, 26 extend from the winglets 29 perpendicular to the plane of the arrow-shaped portion 12. The raised profiles 24, 26 are staggered on the winglets 29, with one raised profile 26 parallel to the tang 20 and the other raised profile 24 located on the opposing side of the separator 10. The tang 20 and the raised profiles 24, 26 create three points of contact with crustacean pincers 40 in use.

All edges of the separator 10 are rounded and smooth to restrict damage to live crustaceans during use of the restraint. Grips 30 in the form of small triangular projections are provided on the rim 14 and outer surfaces of the separator 10 to aid handling in use.

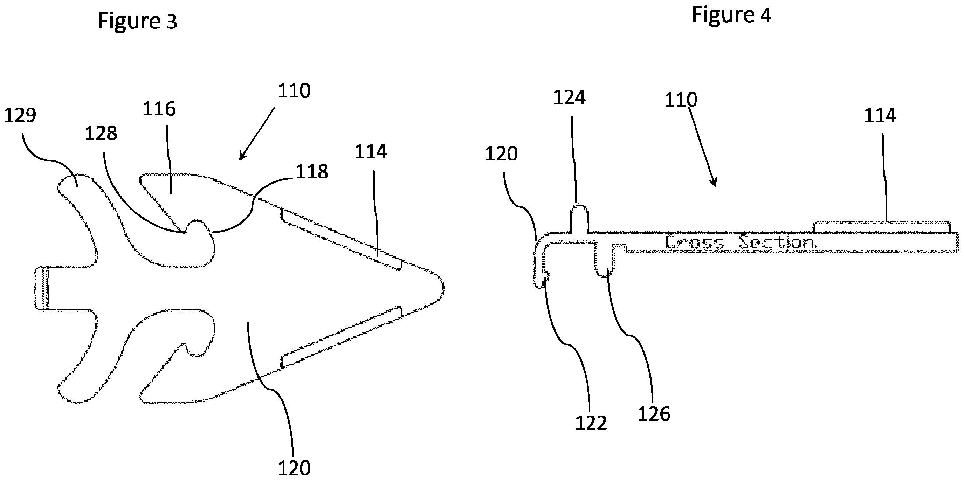

A second embodiment of the separator 110 is shown in Figs. 3 - 7. In order to minimise repetition, similar features of the second embodiment are numbered with a common twodigit reference numeral and are differentiated by a third digit '1' placed before the two common digits. Such features are structured similarly, operate similarly, and/or have similar functions unless otherwise indicated.

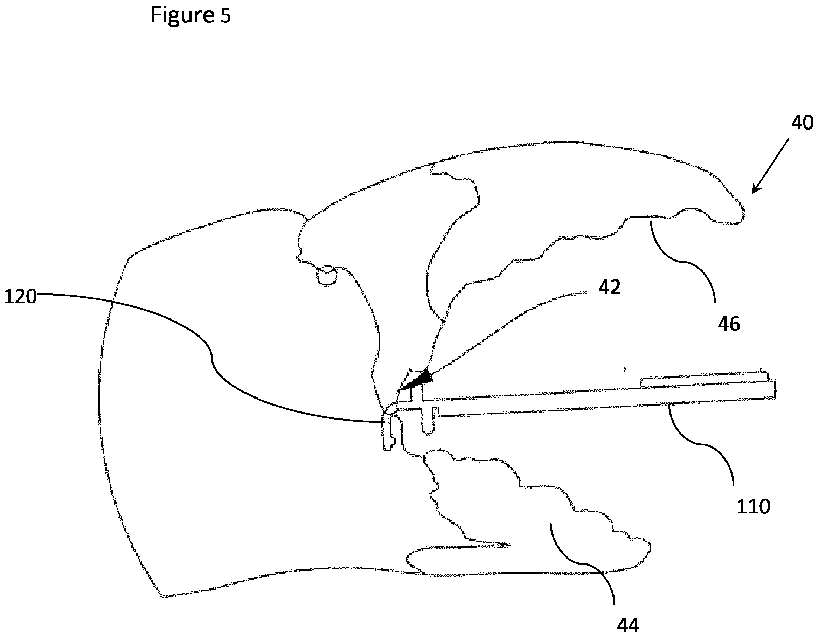

The separator 110 has a modified shape relative to the separator 10 and the outer rim 114 extends around part of the perimeter of the arrow-shaped portion 120. Other than these differences, the separator 110 is broadly similar to the separator 10 of Figs 1 and 2. Both separators 10, 110 are suitable for use with pincers 40 of live crustaceans and both separators 10, 110 are usable in a similar manner in conjunction with an applicator 50 and anchor 53 hereinafter described. The use and anchoring of the separator 110 will now be described with reference to Figs. 5 to 7. The separator 10 of the first embodiment may be used interchangeably with the anchor 53 and the applicator 50.

Once a crustacean has been landed offshore, it is desirable to restrain the pincers 40 such that the crustacean will not damage, attack or attempt to consume other crustaceans in the same enclosure or tank. According to a method of the invention, the upper and lower pincers 42, 44 are opened and the separator 110 is inserted therebetween with the tang 120 located and hooked in position at the rear of the lower pincer 44 (Fig. 5). Alternatively, the tang 120 may be located and hooked in position at the rear of the upper pincer 46. The crustacean pincers 40 are then closed over the separator 110 such that the tips of the pincers 40 are positioned on the planar arrow-shaped portion 120 and prevented from skidding off the separator 110 by means of the rim 114 (Fig. 4). The tang 120, inward facing ridge 122 and raised profiles 124, 126 increase the interface and area of contact between the separator 110 and inner surface 46 of the pincers 40. These multiple points of contact improve retention of the restraint between the upper and lower pincers 42, 44.

Once the separator 110 is in position between the pincers 40, it is necessary to anchor the separator 110 to form an effective restraint for the crustacean pincers 40. Fig. 7 shows the sequential steps according to one embodiment to anchor the separator 110 in position using an applicator 50. The crustacean pincers 40 are located over the separator 110, although this is not shown in Figure 7 to improve clarity. The applicator 50 comprises first and second identical jaws 51, 52 which together form a cylindrical shape with cuboid anchor retaining means. The anchor 53 in the form of a rubber ring is located over the retaining cuboid.

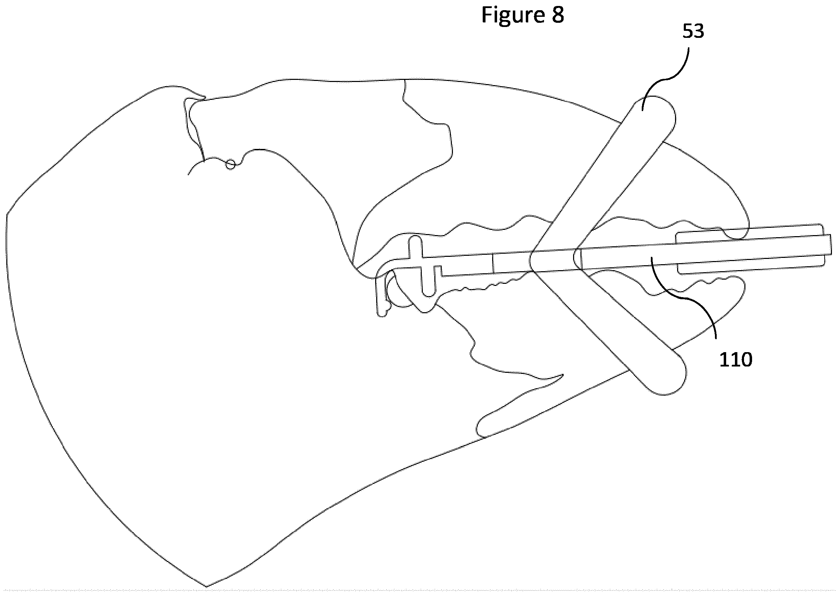

The first and second jaws 51, 52 are moved apart to cause the anchor 53 to elastically deform and stretch. The jaws of the applicator 51, 52, may be manually forced apart or alternatively, used in conjunction with a tool or other mechanical means to separate the jaws 51, 52. The pincers 40 and a leading end of the arrow shaped portion 112 of the separator 110 are moved within the stretched anchor 53, such that the anchor 53 is further elastically deformed and stretched by the wings 116 of the separator 110. Once the wings 116 have passed through the opening in the anchor 53, the rubber anchor 53 snaps into the indents 118. The applicator jaws 51, 52 are then removed, so that the anchor 53 snaps into position around the upper and lower pincers 42, 44 as shown in Figure 8.

The retaining barbs 128 and winglets 129 ensure that the anchor 53 does not slip off separator 110. The tang 120 ensures the correct positioning and retention of the separator 110 on the crustacean pincers 40. The raised profiles 24, 26 extending outwardly from the separator 110 additionally assist with retention of the separator 110 in the correct position and minimise the chance of slippage.

The anchor 53 and separator 110 form an effective and humane restraint to restrict use of the pincers 40.

According to alternative embodiments, different sizes of the pincer restraint are selected, such that the separator is suitably accommodated within the pincers of other types of crustacean or different sizes of crab. For example, male edible crabs are generally larger in size than females. Thus, a restraint optimised for use with male edible crabs requires a separator 10,110 having greater dimensions as well as a thicker joining portion and larger tang 20, 120.

Although particular embodiments of the invention have been disclosed herein in detail, this is by way of example and for the purposes of illustration only. The aforementioned embodiments are not intended to be limiting with respect to the scope of the statements of invention. Relative terms such an "upper", "lower", "underside", "topside", "larger", "thicker", "greater", "smaller", "inward" and "outward" are illustrative and should not be considered as limiting the scope of the invention.

It is contemplated by the inventors that various substitutions, alterations, and modifications may be made to the invention without departing from the scope of the invention as defined by the statements of invention. For example:-
- Components described in the embodiments may be made from different materials. The separator may be formed from a metal, such as stainless steel. The anchor may be made from an alternative material.
- The anchor 53 may be applied to the separator manually without the use of the applicator 50.
- The separator 10, 110 may be provided with a through hole in order to allow a user to stack a plurality of separators 10, 110 on a stake, string or similar arrangement ready for use.

## Claims

1. A crustacean pincer restraint comprising:
a separator (10,110) for insertion between upper and lower crustacean pincers (42, 44);
the separator comprising a tang (20, 120) for locating and hooking to a position at the rear of an upper or lower pincer; and
an anchor (53) for anchoring the separator between the upper and lower pincers to restrain the crustacean pincers in use.

2. A crustacean pincer restraint according to claim 1, wherein the separator comprises a substantially planar arrow-shaped portion (12).

3. A crustacean pincer restraint according to claim 2, wherein a rim or lip (14) is provided along at least part of a perimeter of the substantially planar portion.

4. A crustacean pincer restraint according any preceding claim, wherein the separator comprises an anchor retaining portion.

5. A crustacean pincer restraint according to claim 4, wherein the anchor retaining portion includes indents (18, 118) for receiving the anchor.

6. A crustacean pincer restraint according to claim 5, wherein the indents comprise at least two indents which are spaced-apart along a longitudinal axis of the separator and/or wherein the indents comprise at least one pair of idents which are spaced-apart along a transverse axis of the separator.

7. A crustacean pincer restraint according to any preceding claim, wherein the separator comprises anchor retaining means comprising barbs (128) and/or winglets (129) to substantially retain the anchor in the anchor retaining portion in use.

8. A crustacean pincer restraint according to claim 2, wherein the tang comprises a projection extending substantially perpendicular from the planar portion of the separator, and, optionally, wherein the tang comprises a locator profile for assisting with location and retention of the tang on the upper or lower pincer in use.

9. A crustacean pincer restraint according to any preceding claim; wherein the separator comprises at least one outwardly extending retaining projection shaped to fit within a profile of the inner surface of the pincers in use; and/or wherein the anchor comprises a retaining member configured to surround the pincers and anchor the separator in position in use.

10. A crustacean pincer restraint according to claim 9, wherein the anchor comprises a resilient retaining member locatable within the indents of the separator to anchor the separator in position.

11. A crustacean pincer restraint according to any preceding claim further comprising an applicator for locating the anchor in position relative to the separator in use.

12. A crustacean pincer restraint according to claim 11, wherein the applicator is configured to stretch the anchor such that it is locatable over pincers in use.

13. A crustacean pincer restraint according to claim 12, wherein the applicator comprises two separable jaws and an anchor retaining portion.

14. A method for restraining a crustacean pincer comprising the steps of:
inserting a separator (10, 110) according to claim 1 between upper and lower crustacean pincers (42, 44) and locating and hooking a tang (20,120) of the separator to a position at the rear of the upper or lower pincer; and
anchoring the separator and tang in position and thereby restraining the pincers of the crustacean.

## Patentansprüche

1. Zangenrückhaltevorrichtung für Krustentiere, umfassend:
einen Separator (10, 110) zum Einführen zwischen die obere und untere Krustentierzange (42, 44);
wobei der Separator einen Griffzapfen (20, 120) zum Lokalisieren und Einhaken an einer Position an der Rückseite einer oberen oder unteren Zange umfasst; und
eine Verankerung (53) zum Verankern des Separators zwischen der oberen und unteren Zange, um die Krustentierzange im Gebrauch zurückzuhalten.

2. Zangenrückhaltevorrichtung für Krustentiere nach Anspruch 1, wobei der Separator einen im Wesentlichen planaren, pfeilförmigen Abschnitt (12) umfasst.

3. Zangenrückhaltevorrichtung für Krustentiere nach Anspruch 2, wobei ein Rand oder eine Lippe (14) entlang mindestens eines Teils eines Umfangs des im Wesentlichen planaren Abschnitts bereitgestellt ist.

4. Zangenrückhaltevorrichtung für Krustentiere nach einem der vorstehenden Ansprüche, wobei der Separator einen Verankerungsrückhalteabschnitt umfasst.

5. Zangenrückhaltevorrichtung für Krustentiere nach Anspruch 4, wobei der Verankerungsrückhalteabschnitt Einkerbungen (18, 118) zum Aufnehmen der Verankerung aufweist.

6. Zangenrückhaltevorrichtung für Krustentiere nach Anspruch 5, wobei die Einkerbungen mindestens zwei Einkerbungen umfassen, die entlang einer Längsachse des Separators beabstandet sind, und/oder wobei die Einkerbungen mindestens ein Paar von Einkerbungen umfassen, das entlang einer Querachse des Separators beabstandet ist.

7. Zangenrückhaltevorrichtung für Krustentiere nach einem vorstehenden Anspruch, wobei der Separator Verankerungsrückhaltemittel umfasst, die Widerhaken (128) und/oder Winglets (129) umfassen, um die Verankerung im Gebrauch im Wesentlichen in dem Verankerungsrückhalteabschnitt zurückzuhalten.

8. Zangenrückhaltevorrichtung für Krustentiere nach Anspruch 2, wobei der Griffzapfen einen Vorsprung umfasst, der sich im Wesentlichen senkrecht von dem planaren Abschnitt des Separators erstreckt, und wobei wahlweise der Griffzapfen ein Lokalisierungsprofil zum Unterstützen der Lokalisierung und Rückhaltung des Griffzapfens auf der oberen oder unteren Zange im Gebrauch umfasst.

9. Zangenrückhaltevorrichtung für Krustentiere nach einem der vorstehenden Ansprüche; wobei der Separator mindestens einen sich nach außen erstreckenden Rückhaltevorsprung umfasst, der so geformt ist, dass er im Gebrauch in ein Profil der Innenoberfläche der Zange passt; und/oder wobei die Verankerung ein Rückhalteelement umfasst, das konfiguriert ist, um die Zangen zu umgeben und den Separator im Gebrauch in Position zu verankern.

10. Zangenrückhaltevorrichtung für Krustentiere nach Anspruch 9, wobei die Verankerung ein elastisches Rückhalteelement umfasst, das in den Einkerbungen des Separators angeordnet werden kann, um den Separator in Position zu verankern.

11. Zangenrückhaltevorrichtung für Krustentiere nach einem der vorstehenden Ansprüche, weiter umfassend einen Applikator zum Lokalisieren der Verankerung in Position relativ zu dem Separator in Gebrauch.

12. Zangenrückhaltevorrichtung für Krustentiere nach Anspruch 11, wobei der Applikator so konfiguriert ist, dass er die Verankerung streckt, sodass er im Gebrauch über Zangen lokalisiert werden kann.

13. Zangenrückhaltevorrichtung für Krustentiere nach Anspruch 12, wobei der Applikator zwei trennbare Backen und einen Verankerungsrückhalteabschnitt umfasst.

14. Verfahren zum Zurückhalten einer Krustentierzange, umfassend die folgenden Schritte:
Einsetzen eines Separators (10, 110) nach Anspruch 1 zwischen eine obere und untere Krustentierzange (42, 44) und Lokalisieren und Einhaken eines Griffzapfens (20, 120) des Separators an einer Position an der Rückseite der oberen oder unteren Zange; und
Verankern des Separators und des Griffzapfens in Position und dadurch Zurückhalten der Zange des Krustentiers.

## Revendications

1. Dispositif de retenue de pince de crustacé comprenant :
un séparateur (10, 110) à insérer entre des pinces de crustacé supérieure et inférieure (42, 44) ;
le séparateur comprenant une languette (20, 120) pour un positionnement et un accrochage dans une position à l'arrière d'une pince supérieure ou inférieure ; et
un ancrage (53) pour ancrer le séparateur entre les pinces supérieure et inférieure afin de retenir les pinces de crustacé en utilisation.

2. Dispositif de retenue de pince de crustacé selon la revendication 1, dans lequel le séparateur comprend une partie sensiblement plane en forme de flèche (12).

3. Dispositif de retenue de pince de crustacé selon la revendication 2, dans lequel un rebord ou une lèvre (14) est prévu(e) le long d'au moins une partie d'un périmètre de la partie sensiblement plane.

4. Dispositif de retenue de pince de crustacé selon une quelconque revendication précédentes, dans lequel le séparateur comprend une partie de retenue d'ancrage.

5. Dispositif de retenue de pince de crustacé selon la revendication 4, dans lequel la partie de retenue d'ancrage inclut des empreintes (18, 118) pour recevoir l'ancrage.

6. Dispositif de retenue de pince de crustacé selon la revendication 5, dans lequel les empreintes comprennent au moins deux empreintes qui sont espacées le long d'un axe longitudinal du séparateur et/ou dans lequel les empreintes comprennent au moins une paire d'empreintes qui sont espacées le long d'un axe transversal du séparateur.

7. Dispositif de retenue de pince de crustacé selon une quelconque revendication précédente, dans lequel le séparateur comprend des moyens de retenue d'ancrage comprenant des barbes (128) et/ou des ailettes (129) pour retenir sensiblement l'ancrage dans la partie de retenue d'ancrage en utilisation.

8. Dispositif de retenue de pince de crustacé selon la revendication 2, dans lequel la languette comprend une saillie s'étendant sensiblement perpendiculairement par rapport à la partie plane du séparateur, et, facultativement, dans lequel la languette comprend un profil de positionnement pour aider au positionnement et à la retenue de la languette sur la pince supérieure ou inférieure en utilisation.

9. Dispositif de retenue de pince de crustacé selon une quelconque revendication précédente; dans lequel le séparateur comprend au moins une saillie de retenue s'étendant vers l'extérieur formée pour s'adapter à l'intérieur d'un profil de la surface intérieure des pinces en utilisation ; et/ou dans lequel l'ancrage comprend un élément de retenue configuré pour entourer les pinces et ancrer le séparateur en position en utilisation.

10. Dispositif de retenue de pince de crustacé selon la revendication 9, dans lequel l'ancrage comprend un élément de retenue élastique pouvant être placé à l'intérieur des empreintes du séparateur pour ancrer le séparateur en position.

11. Dispositif de retenue de pince de crustacé selon une quelconque revendication précédente, comprenant en outre un applicateur pour positionner l'ancrage en position par rapport au séparateur en utilisation.

12. Dispositif de retenue de pince de crustacé selon la revendication 11, dans lequel l'applicateur est configuré pour étirer l'ancrage de sorte qu'il puisse être positionnée au-dessus des pinces en utilisation.

13. Dispositif de retenue de pince de crustacé selon la revendication 12, dans lequel l'applicateur comprend deux mâchoires séparables et une partie de retenue d'ancrage.

14. Procédé pour retenir une pince de crustacé comprenant les étapes consistant à :
insérer un séparateur (10, 110) selon la revendication 1 entre les pinces de crustacé supérieure et inférieure (42, 44) et positionner et accrocher une languette (20, 120) du séparateur dans une position à l'arrière de la pince supérieure ou inférieure ; et
ancrer le séparateur et la languette en position et retenir ainsi les pinces du crustacé.
